# FASCICULE DE BREVET EUROPEEN

(11) **EP 1 957 313 B1**
(45) Date de publication et mention de la délivrance du brevet: **31.10.2012**
(21) Numéro de dépôt: 06830165.4
(22) Date de dépôt: 28.11.2006
(51) Int. Cl.: B60Q 1/04, B62D 21/15

(54) **PIECE DE VEHICULE AUTOMOBILE COMPORTANT DES MOYENS DE SUPPORT D'UN BLOC OPTIQUE**
KRAFTFAHRZEUGTEIL MIT MITTELN ZUM STÜTZEN EINES OPTISCHEN BLOCKS
MOTOR VEHICLE PART COMPRISING MEANS FOR SUPPORTING AN OPTICAL BLOCK

(30) Priorité: 28.11.2005 FR 0512034
(43) Date de publication de la demande: 20.08.2008
(73) Titulaire: Compagnie Plastic Omnium, 69007 Lyon (FR)
(72) Inventeur: ANDRE, Gérald, F-01500 Amberieu En Bugey (FR); FAYT, Arnold, F-01640 Jujurieux (FR); ROCHEBLAVE, Laurent, F-69100 Villeurbanne (FR)
(74) Mandataire: Remy, Vincent Noel Paul
(86) Numéro de dépôt international: PCT/EP2006/069015
(87) Numéro de publication internationale: WO 2007/060260

(56) Documents cités:
- EP-A- 1 203 693
- DE-A1- 10 352 310
- DE-A1- 19 959 892
- DE-C1- 10 149 120
- FR-A- 2 844 755
- US-A1- 2004 057 249
- PATENT ABSTRACTS OF JAPAN vol. 2002, no. 03, 3 avril 2002 (2002-04-03) & JP 2001 310767 A (MAZDA MOTOR CORP), 6 novembre 2001 (2001-11-06)

## Description

La présente invention concerne une pièce de véhicule automobile comportant des moyens de support d'un bloc optique.

On connaît déjà dans l'état de la technique, notamment des documents FR 2844755 et EP 1577610, un bloc optique agencé sur le véhicule de façon à amortir des chocs d'intensité moyenne avec d'autres véhicules (appelés chocs assurance ou réparabilité) ou bien avec la hanche d'un piéton, ces chocs étant dirigés principalement dans la direction de déplacement du véhicule (généralement appelée X). Ce bloc optique est doté de fixations qui se cassent lorsqu'elles reçoivent une forte sollicitation dans la direction X, si bien que le bloc optique recule. Ainsi, le bloc optique n'est pas endommagé par le choc et peut facilement être réparé. En outre, il ne constitue pas un point dur dangereux dans le cas d'un choc avec la hanche d'un piéton.

On sait par ailleurs que l'on cherche à protéger la tête des piétons en cas d'impact avec la zone recouvrant l'aile avant et le bloc optique, dite "zone tête". A cet effet, on souhaite ménager une zone d'enfoncement selon la direction verticale (généralement appelée Z), dépourvue de point dur, de façon à laisser la tête s'enfoncer sur une certaine distance lors d'un impact.

On connaît déjà dans l'état de la technique un support d'aile capable d'amortir un tel choc, appelé "choc tête", décrit notamment dans les publications FR 2855810 ou DE 10347810.

Le problème consiste en ce que l'on ne sait pas traiter le choc tête sur un véhicule dans lequel l'aile recouvre le bloc optique. En effet, le bloc optique constitue un point dur, si bien que, même si l'aile s'enfonce grâce au support de l'état de la technique, le bloc optique demeure dangereux pour la tête du piéton.

La présente invention vise à fournir une pièce supportant le bloc optique capable de traiter un choc tête quelle que soit la configuration de l'avant du véhicule.

A cet effet, l'invention concerne une pièce pour véhicule automobile, comportant des moyens de support d'un bloc optique, ces moyens de support du bloc optique possédant une configuration initiale dite de fonctionnement, dans laquelle le bloc optique est maintenu à une altitude donnée sur le véhicule, caractérisée en ce que les moyens de support du bloc optique peuvent en outre prendre une seconde configuration dite d'enfoncement, lorsqu'il subissent une force verticale, sensiblement égale à celle d'un impact avec la tête d'un piéton, seconde configuration dans laquelle le bloc optique se trouve à une altitude plus petite sur le véhicule.

Grâce à l'invention, on dispose d'une pièce-support assurant la fonction de support de bloc optique lorsqu'il se trouve dans sa configuration de fonctionnement, tout en assurant une protection du piéton en s'enfonçant sur une certaine distance sous l'action de la tête du piéton. Ainsi, le bloc optique ne constitue pas un point dur dangereux.

Par "force verticale", on entend une force dirigée selon la direction verticale classique du véhicule, appelée direction Z. La valeur de cette force selon l'invention, sensiblement égale à celle d'un impact avec la tête d'un piéton, est comprise entre 250 et 900 Kg, de préférence entre 300 et 600 kg. De façon avantageuse, les moyens de support prennent une configuration d'enfoncement également sous l'effet d'une force partiellement verticale, c'est-à-dire une force comportant non seulement une composante selon la direction verticale, mais également une composante selon la direction longitudinale du véhicule, appelée direction X, et/ou selon la direction transversale, appelée direction Y. Une telle pièce est ainsi capable de traiter non seulement le choc tête, mais également un choc "hanche".

Par "moyens de support du bloc optique", on entend des moyens capables de porteur, au moins partiellement, le bloc optique. Généralement, le bloc optique est porté en trois ou quatre points. La seconde configuration des moyens de support peut résulter d'une rupture d'un ou deux de ces points et d'une simple rotation autour des autres points. Elle peut aussi résulter de tous les points.

Par "bloc optique", on entend l'ensemble d'un vitrage d'optique, d'un boîtier d'optique et des composants d'éclairage. Par simplification, les termes "bloc optique" pourront désigner l'une ou l'autre de ces pièces, ou l'ensemble de celles-ci.

Selon un mode de réalisation préféré, la pièce comporte en outre des moyens de support d'une aile du véhicule, possédant une configuration initiale de fonctionnement, dans laquelle l'aile est maintenue à une altitude donnée et pouvant également prendre une seconde configuration d'enfoncement, lorsqu'ils subissent une force verticale, sensiblement égale à celle d'un impact avec la tête d'un piéton, seconde configuration dans laquelle l'aile se trouve à une altitude plus petite.

Ainsi, en cas de choc tête, les moyens de support de l'aile ne constituent pas non plus un point dur pour le piéton. Ce mode de réalisation est d'autant plus intéressant sur les véhicules dans lesquels l'aile recouvre le bloc optique. En outre, plutôt que d'utiliser deux pièces support distinctes pour le bloc optique et l'aile, munies chacune de ses propres moyens de fixation à la structure du véhicule, on utilise une même pièce pour assurer les fonctions de support de bloc optique et de support d'aile, si bien que la configuration du bloc avant du véhicule est simplifiée, notamment parce que les moyens de fixation à la structure sont communs.

De préférence, la pièce est munie de moyens fusibles, agencés pour maintenir les moyens de support du bloc optique et/ou de l'aile dans leur configuration de fonctionnement. Ces moyens sont fusibles dans la direction verticale, c'est-à-dire qu'ils sont capables de se rompre ou de se désactiver sous l'effet d'une force verticale, et ainsi de permettre aux moyens de support du bloc optique et/ou de l'aile de prendre leur configuration d'enfoncement.

De manière avantageuse, les moyens fusibles sont des moyens déformables par flambement ou par pliage, ou des moyens se rompant par cisaillement.

De préférence, les moyens fusibles sont constitués par des moyens de fixation de la pièce à une pièce de structure du véhicule.

Par "pièce de structure du véhicule", on entend une pièce rigide, appartenant au châssis ou à la caisse en blanc du véhicule, telle qu'un longeron supérieur ou inférieur, une traverse ou des jambages d'une face avant technique, un montant de la caisse portant les charnières d'une portière du véhicule ou d'un capot, un montant de baie, un arche de roue structurel, etc.

De préférence, la pièce comporte en outre des moyens de positionnement du bloc optique ou d'un organe supportant le bloc optique, des moyens de positionnement de l'aile, des moyens de positionnement d'une peau de pare-chocs, et/ou encore des moyens de positionnement d'un capot. Ainsi, outre sa fonction semi-structurelle, la pièce assure une fonction de mise en référence des différentes pièces de carrosserie, celles-ci étant justement situées dans une zone particulièrement exigeante du point de vue de la mise en référence et des affleurements.

Il est particulièrement avantageux que la pièce comprenne en particulier des moyens de positionnement de deux pièces voisines de carrosserie l'une par rapport à l'autre, car ces moyens permettent d'agir directement sur les deux bords en regard des pièces à mettre en référence pour positionner les bords l'un par rapport à l'autre. Le support peut ainsi être muni de moyens de positionnement par appui direct de l'aile et du bloc optique, de façon à gérer au mieux les jeux et la mise en effleurement entre l'arête supérieure du vitrage du bloc optique et le bord de l'aile.

De préférence, la pièce assure également une fonction d'anti-cloquage de l'aile. Par exemple, elle épouse sensiblement la forme intérieure de l'aile, ce qui permet d'utiliser une aile relativement souple et fine, par exemple en matière plastique, en aluminium ou en acier, et d'avoir à prévoir un renfort dans l'aile.

De façon avantageuse, la pièce est adaptée pour supporter l'aile pendant une étape de peinture ou de cataphorèse du véhicule, ce qui permet de monter la pièce sur le véhicule avant le montage de l'aile, et de supporter cette dernière pendant les étapes du montage.

Une pièce selon l'invention pourra en outre comporter l'une ou plusieurs des caractéristiques suivantes.
- La pièce comporte des moyens de fixation à deux pièces de structure du véhicule, à savoir un jambage vertical avant et un montant latéral de la caisse.
- Les moyens de support du bloc optique et/ou de l'aile sont agencés de manière à conserver leur configuration de fonctionnement sous l'effet d'une force sensiblement égale à celle d'un appui fessier ou à des vibrations de fonctionnement du véhicule. En d'autres termes, les moyens fusibles sont suffisamment résistants pour supporter une force minimale, par exemple 50 Kg, conférant la rigidité nécessaire au fonctionnement de la pièce, tout en pouvant se rompre ou se désactiver sous l'effet d'une force dépassant un certain seuil.
- Les moyens de support du bloc optique et/ou de l'aile peuvent prendre deux configurations d'enfoncement, selon qu'ils subissent une force verticale égale à celle d'un impact avec la tête d'un piéton de taille adulte ou de taille enfant.
- La pièce s'étend sur la majeure partie d'une zone dite d'enfoncement de la tête du piéton, zone constituée par une partie supérieure de l'aile et du bloc optique.
- La pièce est conformée de façon à libérer l'accès au bloc optique en vue d'un changement d'ampoule.
- La pièce comporte des moyens réglables de fixation du bloc optique, de façon à permettre de positionner le bloc optique (ou du moins son vitrage ou son boîtier) par rapport au reste du véhicule avant sa fixation définitive pour son fonctionnement sur le véhicule.
- La pièce comporte des butées de capot.
- La pièce est réalisée en matière thermoplastique de type polyamide résistant à 200°C, éventuellement associée par surmoulage à des renforts métalliques. De façon alternative, elle est réalisée en résine thermodurcissable, du type SMC (pour Sheet Moulding Compound) ou bien du type commercialisé sous la marque AMC 3600 (Adapted Moulding Compound).

L'invention a également pour objet un ensemble d'un bloc optique et d'une pièce telle que définie ci-dessus, dans lequel la pièce est venue de matière avec le boîtier d'optique.

Eventuellement, les moyens de support de l'aile sont ménagés sur le bloc optique.

L'invention sera mieux comprise à la lecture de la description qui va suivre, donnée uniquement à titre d'exemple et faite en se référant aux dessins dans lesquels :
- la figure 1 est un schéma d'un avant de véhicule automobile;
- la figure 2 est un schéma d'une partie structurelle avant de véhicule, comportant une pièce selon un premier mode de réalisation de l'invention ;
- la figure 3 est un schéma représentant un moyen fusible ménagé sur la pièce de la figure 2 ;
- la figure 4 est une vue en coupe de la pièce de la figure 2, supportant un bloc optique et une aile ;
- la figure 5 est un schéma en perspective d'une pièce selon un deuxième mode de réalisation de l'invention ;
- la figure 6 est un schéma d'une pièce selon un troisième mode de réalisation de l'invention ; et
- la figure 7 est un schéma d'un moyen fusible pouvant être ménagé sur une pièce selon l'invention.
- la figure 8 est un schéma en perspective d'un moyen fusible ménagé sur une pièce selon l'invention.

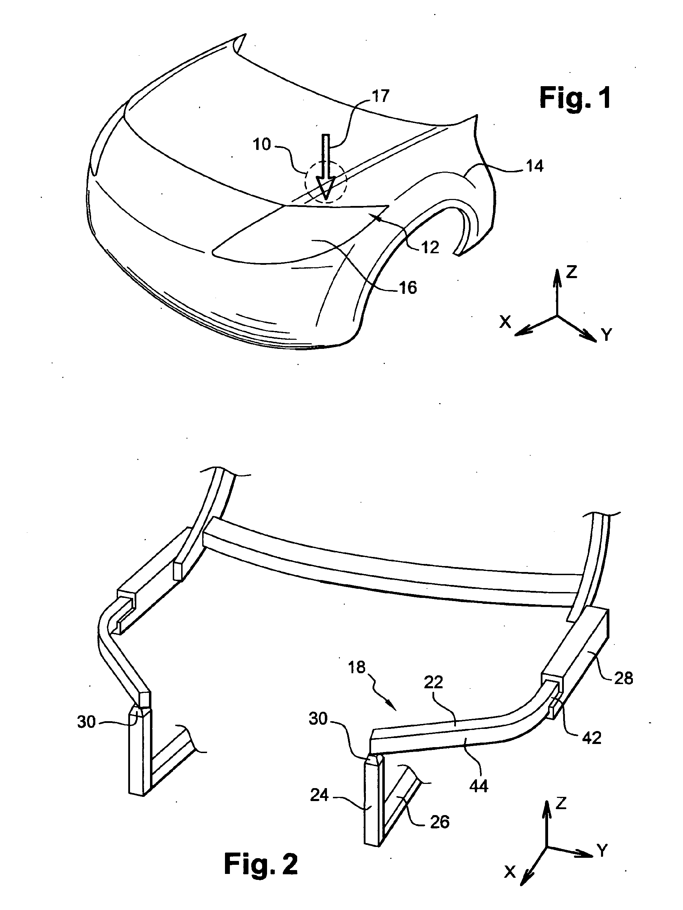

Une pièce selon l'invention permet de protéger un piéton qui serait renversé par un véhicule et dont la tête 10 serait susceptible de percuter une zone 12 d'un avant de véhicule automobile, appelée "zone tête", visible sur la figure 1.

Lors du choc, la zone 12 subit une force essentiellement verticale, dirigée selon la direction Z, représentée par la flèche 17. Cette force pourrait également avoir des composantes dans les directions X et Y, c'est-à-dire qu'elle serait dirigée selon une direction oblique par rapport au véhicule.

Cette zone est constituée par la partie supérieure d'une aile 14, recouvrant un bloc optique 16. Lors du fonctionnement du véhicule, l'aile 14 et le bloc optique 16 sont maintenus à une altitude donnée sur le véhicule, dite altitude de fonctionnement, celle représentée sur la figure 1.

Le bloc optique est supporté par une pièce semi-structurelle 18 selon l'invention, représentée sur la figure 2, constituant un support du bloc optique 16 et de l'aile 14 (non représentés).

Le bloc 16 peut éventuellement être supporté par la pièce 18 par l'intermédiaire d'un organe de support, fixé à la pièce 18. Cet organe de support (non représenté), convenablement positionné par rapport aux autres pièces de carrosserie, permet de monter et démonter le bloc optique sans avoir à le positionner à nouveau.

La pièce 18 constitue également un support de l'aile avant 12 du véhicule. Plus précisément, elle comporte des moyens 22 de support de l'aile, constitués par la partie supérieure de la pièce 18.

La pièce 18 est fixée à deux pièces de structure du véhicule, à savoir un jambage vertical avant 24, solidaire d'un longeron 26, et un montant latéral 28 de la caisse.

La pièce 18 est fixée au jambage 24 par l'intermédiaire de moyens fusibles 30. Ces moyens 30 sont agencés pour maintenir la pièce 18 selon une configuration initiale de fonctionnement, dans laquelle le bloc optique 16 et l'aile 14 sont maintenus à leur altitude de fonctionnement.

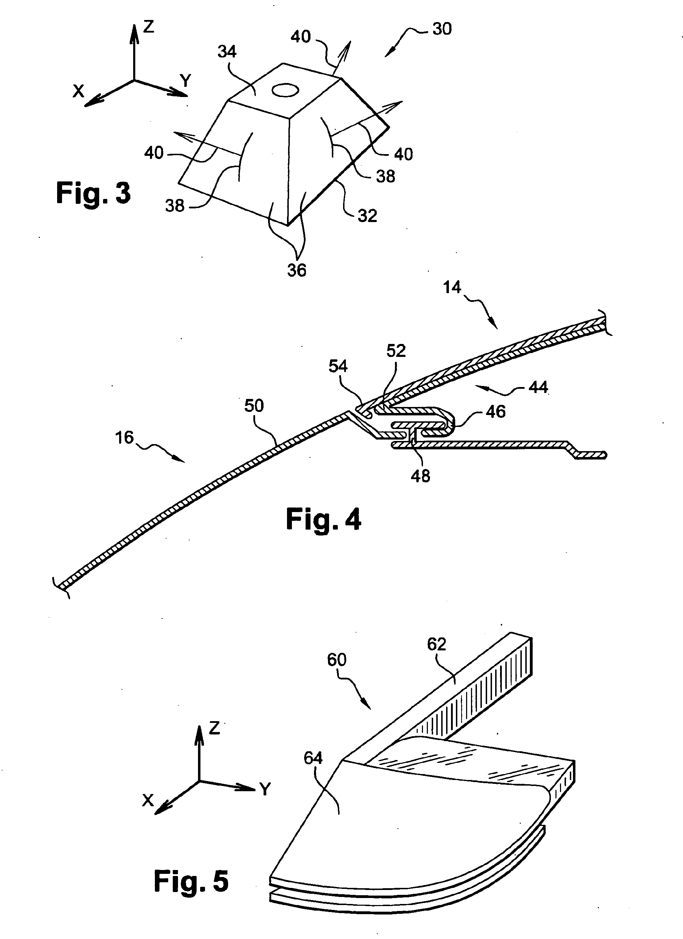

Ces moyens 30 peuvent être constitués d'un plot, représenté sur la figure 3, creux de forme pyramidale à base 32 et sommet 34 carrés, dont les surfaces latérales 36 sont pré-fendues. Grâce à ces fentes 38, les surfaces 36 peuvent flamber dans la direction indiquée par les flèches 40 lorsque le plot subit une certaine force verticale dans la direction Z.

Lors d'un choc tête, la zone 12 et par conséquent le plot 30 subissent une force verticale suffisante pour faire flamber les parois 36. la hauteur du plot diminue, entraînant vers le bas la pièce 18 fixée sur son sommet 34, qui se trouve alors dans une configuration d'enfoncement dans laquelle l'altitude du bloc optique 16 et de l'aile 14 est plus petite que leur altitude de fonctionnement. Cette différence d'altitude augmente la distance d'absorption d'énergie avant de percuter une pièce de structure du véhicule.

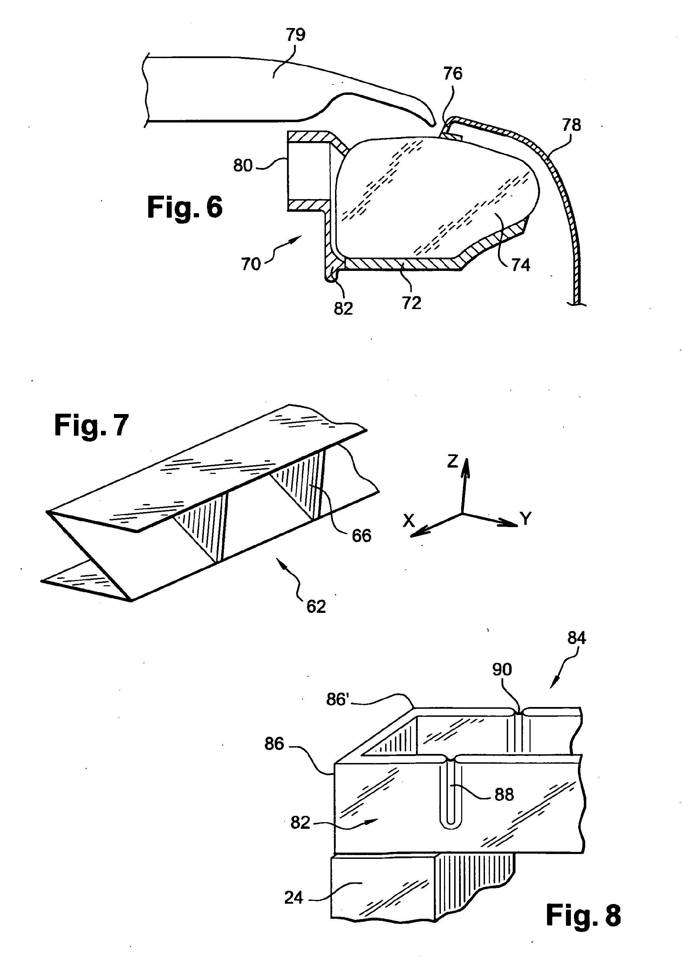

Dans une variante représentée à la figure 8, la pièce 18 comporte une partie inférieure 84, fixée sur le jambage 24 dans une zone de contact 82. La partie inférieure 84 est un profilé en U, comprenant deux parois latérales 86 et 86'.

Les moyens 30 comprennent dans ce cas une striction d'épaisseur 88 des parois latérales 86 et 86' et une encoche 90, à l'extrémité supérieure de chaque striction. Ces moyens fusibles 30 sont situés dans une zone dite "fragile", ménagée à la périphérie de la zone de contact 82.

Lors d'un choc tête, la pièce 18 subit essentiellement une force verticale dirigée vers le bas. Les efforts se concentrent alors dans la « zone fragile » à la périphérie de la zone de contact 82, cette dernière étant maintenue en place de façon rigide sur le jambage 24.

La force subie par les parois latérales 86 et 86' au niveau de la striction d'épaisseur 88 est suffisante pour créer, par cisaillement, une amorce de rupture au voisinage de l'encoche 90. Cela entraîne la rupture de la partie inférieure 84 dans la zone fragile, et donc une diminution en altitude du bloc optique 16, car celui-ci n'est plus soutenu par le jambage 24 et donc par la caisse.

On pourrait envisager d'autres moyens fusibles que ceux décrits. Par exemple, une pièce ménagée "en accordéon" dans la direction Z entre la pièce 18 et le jambage 24, de façon à pouvoir diminuer son altitude sous l'action d'une force verticale.

Des moyens fusibles 42 peuvent également être prévus sur l'autre extrémité de la pièce 18, fixée sur le montant latéral 28.

La pièce 18 porte par ailleurs des moyens 44 de positionnement direct du bloc optique 16 et de l'aile 12, visibles plus précisément sur la figure 4.

Ces moyens de positionnement 44 comportent une rainure 46 permettant de positionner une partie 48 du boîtier d'optique, située au voisinage du vitrage d'optique 50. Les moyens 44 comportent, au voisinage de la rainure 46, une nervure 52, recevant le bord supérieur 54 de l'aile. Comme on peut le voir sur la figure, le bord supérieur 54 de l'aile et celui du vitrage 50 sont correctement mis en affleurement, avec un jeu minimal, grâce aux moyens 44.

Selon un autre mode de réalisation visible sur la figure 5, une pièce 60 selon l'invention est constituée d'une réglette 62 le long de laquelle est fixé le bord supérieur de l'aile. Le bloc optique 64 est également fixé sur cette réglette 62. Il peut mettre être moulé d'une seule pièce avec la réglette 62. Cependant, on préférera ménager des fixations réglables du bloc optique sur la réglette 62, de façon à le positionner sur le véhicule avant de le fixer définitivement à son altitude de fonctionnement.

La pièce 60 constitue un support du bloc optique 64 et de l'aile. Elle épouse sensiblement la forme intérieure supérieure de l'aile, de façon à jouer un rôle d'anti-cloquage.

Elle peut prendre une configuration d'enfoncement lorsqu'elle subit une force verticale égale à celle d'un impact avec la tête d'un piéton. Dans une telle configuration, le bloc optique et l'aile se trouvent à une altitude plus basse.

Cette configuration d'enfoncement est obtenue grâce des moyens fusibles obtenus par la forme de la réglette 62, constituée d'un tube creux capable de se déformer par flambement. La réglette 62 peut également avoir une forme en Z schématisée sur la figure 7, et être munie de parois 66 capables de flamber sous l'action d'une force verticale.

Selon un autre mode de réalisation de l'invention représenté sur la figure 6, une pièce 70 selon l'invention comprend des moyens 72 de support du bloc optique 74, celui-ci portant des moyens 76 de support de l'aile 78. Le bloc optique 74 est recouvert en partie par le capot 79 du véhicule. Une partie 80 de la pièce 70 est fusible lors d'un choc tête. Si le choc a lieu plus particulièrement sur la partie extérieure de l'aile, la partie 80 s'enfonce, si bien que la partie extérieure du bloc optique 74 peut pivoter par rapport à une partie 82 de la pièce 70 et ainsi diminuer d'altitude.

Dans un second mode de réalisation représenté sur la figure 8, la pièce 81 est de géométrie semblable à celle de la pièce représentée sur la figure 2, et est placée dans le véhicule automobile de la même façon. La pièce 81 comporte une partie inférieure 81??, qui est en contact avec le jambage 24 dans une zone de contact 82, située dans la partie inférieure 84 de la pièce 18, avec le jambage 24. La partie inférieure 84 est un profilé en U comprenant, deux parois latérales 86 et 86'. £

Les moyens 30 comprennent dans ce cas une striction d'épaisseur 88 des parois latérales 86 et 86' et une encoche 90, à l'extrémité supérieure de la paroi, de contact 82. Ces moyens fusibles 30 sont situés dans une zone appelée "fragile", située à la périphérie de la zone de contact 82.

Lors d'un choc tête, la pièce 81 subit une force verticale dirigée vers le bas. Les efforts se concentrent alors à la périphérie de la zone de contact 82, car celle-ci est maintenue de façon rigide par le jambage 24.

La force subie par cisaillement par les parois latérales 84 et 86 au niveau de la striction d'épaisseur 88 à cet endroit est suffisante pour créer une amorce de rupture au voisinage de l'encoche 90. Cela entraîne la rupture de la partie inférieure 84 dans la zone fragile, ce qui entraîne une diminution en altitude du bloc optique, car celui-ci n'est plus soutenu par la caisse, par l'intermédiaire du jambage.

## Revendications

1. Pièce (18, 60, 70) pour véhicule automobile, comportant des moyens de support d'un bloc optique (16, 64, 74), ces moyens de support du bloc optique possédant une configuration initiale dite de fonctionnement, dans laquelle le bloc optique est maintenu à une altitude donnée sur le véhicule, les moyens de support du bloc optique pouvant en outre prendre une seconde configuration dite d'enfoncement, lorsqu'il subissent une force verticale, sensiblement égale à celle d'un impact avec la tête d'un piéton, seconde configuration dans laquelle le bloc optique (16, 64, 74) se trouve à une altitude plus petite sur le véhicule, **caractérisée en ce que** la pièce comporte en outre des moyens (22, 62, 80) de support d'une aile (14, 78) du véhicule, possédant une configuration initiale de fonctionnement, dans laquelle l'aile est maintenue à une altitude donnée et pouvant également prendre une seconde configuration d'enfoncement, lorsqu'ils subissent une force verticale, sensiblement égale à celle d'un impact avec la tête d'un piéton, seconde configuration dans laquelle l'aile se trouve à une altitude plus petite.

2. Pièce selon la revendication 1, munie de moyens fusibles (30, 66, 80), agencés pour maintenir les moyens de support du bloc optique et/ou de l'aile dans leur configuration de fonctionnement.

3. Pièce selon la revendication 2, dans lequel les moyens fusibles sont des moyens déformables par flambement ou par pliage.

4. Pièce selon la revendication 2 ou 3, dans laquelle les moyens fusibles sont adaptés pour se rompre par cisaillement.

5. Pièce selon l'une quelconque des revendications 2 à 4, dans lequel les moyens fusibles sont des moyens de fixation de la pièce à une pièce de structure du véhicule, notamment un jambage vertical avant (24) ou un montant latéral (28) de la caisse.

6. Pièce selon l'une quelconque des revendications 1 à 5, comportant des moyens de positionnement du bloc optique ou d'un organe supportant le bloc optique.

7. Pièce selon l'une quelconque des revendications 1 à 6, comportant des moyens de positionnement de l'aile, d'une peau de pare-chocs ou d'un capot.

8. Pièce selon l'une quelconque des revendications 1 à 7, comprenant des moyens (44) de positionnement de deux pièces voisines de carrosserie l'une par rapport à l'autre.

9. Pièce selon l'une quelconque des revendications 1 à 8, assurant une fonction d'anti-cloquage de l'aile.

10. Pièce selon l'une quelconque des revendications 1 à 9, dans laquelle les moyens de support du bloc optique et/ou de l'aile peuvent prendre deux configurations d'enfoncement, selon qu'ils subissent une force verticale égale à celle d'un impact avec la tête d'un piéton de taille adulte ou de taille enfant.

11. Pièce selon l'une quelconque des revendications 1 à 10, s'étendant sur la majeure partie d'une zone (12) dite d'enfoncement de la tête du piéton.

12. Pièce selon l'une quelconque des revendications 1 à 11, comportant des moyens réglables de fixation du bloc optique.

13. Pièce selon l'une quelconque des revendications 1 à 12, comportant des butées de capot.

14. Pièce selon l'une quelconque des revendications 1 à 13, dans laquelle les moyens de support du bloc optique et/ou de l'aile peuvent prendre leur configuration d'enfoncement également sous l'effet d'une force partiellement verticale.

15. Ensemble d'un bloc optique et d'une pièce selon l'une quelconque des revendications 1 à 14, dans lequel la pièce (62) est venue de matière avec le boîtier d'optique (64).

## Claims

1. A motor vehicle part (18, 60, 70) including means for supporting a light unit (16, 64, 74), these light unit support means possessing an initial, so-called "operating" configuration in which the light unit is held at a given height on the vehicle, the light unit support means being also capable of taking up a second, so-called "depressed" configuration on being subjected to a vertical force substantially equal to that of an impact with the head of a pedestrian, in which second configuration the light unit (16, 64, 74) is lower down relative to the vehicle, the part being **characterized in that** it further includes means (22, 62, 80) for supporting a fender (14, 78) of the vehicle, said means possessing an initial, operating configuration in which the fender is held at a given altitude, and also being capable of taking up a second, depressed configuration on being subjected to a vertical force substantially equal to that from an impact with the head of a pedestrian, in which second configuration the fender occupies a lower position.

2. A part according to claim 1, provided with fusible means (30, 66, 80) arranged to hold the means for supporting the light unit and/or the fender in their operating configuration.

3. A part according to claim 2, in which the fusible means are means that are deformable in buckling or in folding.

4. A part according to claim 2 or claim 3, in which the fusible means are adapted to break in shear.

5. A part according to any one of claims 2 to 4, in which the fusible means are means for fastening the part to a structural part of the vehicle, in particular a front vertical upright (24) or a side rail (28) of the body.

6. A part according to any one of claims 1 to 5, including means for positioning the light unit or a member for supporting the light unit.

7. A part according to any one of claims 1 to 6, including means for positioning the fender, a bumper skin or a hood.

8. A part according to any one of claims 1 to 7, including means (44) for positioning two adjacent bodywork pieces relative to each other.

9. A part according to any one of claims 1 to 8, performing an anti-indentation function for the fender.

10. A part according to any one of claims 1 to 9, in which the means for supporting the light unit and/or the fender are capable of taking up two depressed configurations, depending on whether they are subjected to a vertical force equal to that of an impact with the head of a pedestrian of adult size or of child size.

11. A part according to any one of claims 1 to 10, extending over the major fraction of a so-called pedestrian head impact zone (12).

12. A part according to any one of claims 1 to 11, including adjustable means for fastening the light unit.

13. A part according to any one of claims 1 to 12, including hood abutments.

14. A part according to any one of claims 1 to 13, in which the means for supporting the light unit and/or the fender can also take up their depressed configuration(s) under the effect of a force that is vertical in part only.

15. An assembly comprising a light unit and a part according to any one of claims 1 to 14, in which the part (62) is made integrally with the light unit (64).

## Patentansprüche

1. Teil (18, 60, 70) für ein Kraftfahrzeug, aufweisend Mittel zum Halten eines optischen Blocks (16, 64, 74), wobei diese Mittel zum Halten des optischen Blocks eine so genannte Anfangsbetriebskonfiguration besitzen, in der der optische Block auf einer gegebenen Höhe an dem Fahrzeug gehalten wird, wobei die Mittel zum Halten des optischen Blocks ferner eine zweite so genannte Versenkungskonfiguration annehmen können, wenn sie einer vertikalen Kraft ausgesetzt sind, die im Wesentlichen gleich jener eines Stoßes mit dem Kopf eines Fußgängers ist, wobei sich der optische Block (16, 64, 74) in der zweiten Ausführung in einer geringeren Höhe an dem Fahrzeug befindet, **dadurch gekennzeichnet, dass** das Teil ferner Mittel (22, 62, 80) zum Halten eines Kotflügels (14, 78) des Fahrzeugs aufweist, die eine so genannte Anfangsbetriebskonfiguration besitzen, in der der Kotflügel in einer gegebenen Höhe gehalten wird, und ebenfalls eine zweite Versenkungskonfiguration einnehmen können, wenn sie einer vertikalen Kraft ausgesetzt sind, die im Wesentlichen gleich jener eines Stoßes mit dem Kopf eines Fußgängers ist, wobei sich der Kotflügel in der zweiten Konfiguration in einer geringeren Höhe befindet.

2. Teil nach Anspruch 1, das mit Sicherungsmitteln (30, 66, 80) versehen ist, die derart eingerichtet sind, dass die Mittel zum Halten des optischen Blocks und/oder des Kotflügels in ihrer Betriebsauskonfiguration gehalten werden.

3. Teil nach Anspruch 2, bei dem die Sicherungsmittel durch Knicken oder Falzen verformbare Mittel sind.

4. Teil nach Anspruch 2 oder 3, bei dem die Sicherungsmittel derart vorgesehen sind, dass sie durch Scherbeanspruchung brechen.

5. Teil nach einem der Ansprüche 2 bis 4, bei dem die Sicherungsmittel Mittel zur Befestigung des Teils an einem Strukturteil des Fahrzeugs sind, insbesondere ein vorderer vertikaler Pfosten (24) oder ein seitlicher Ständer (28) der Karosserie.

6. Teil nach einem der Ansprüche 1 bis 5, aufweisend Mittel zur Positionierung des optischen Blocks und eines Elements, das den optischen Block hält.

7. Teil nach einem der Ansprüche 1 bis 6, aufweisend Mittel zur Positionierung des Kotflügels, einer Stoßdämpferschicht oder einer Motorhaube.

8. Teil nach einem der Ansprüche 1 bis 7, aufweisend Mittel (44) zur Positionierung zweier benachbarter Karosserieteile in Bezug zueinander.

9. Teil nach einem der Ansprüche 1 bis 8, das eine Funktion zur Verhinderung der Ausbauchung des Kotflügels gewährleistet.

10. Teil nach einem der Ansprüche 1 bis 9, bei dem die Mittel zum Halten des optischen Blocks und/oder des Kotflügels zwei Versenkungskonfigurationen annehmen können, je nachdem, ob sie einer vertikalen Kraft gleich jener des Stoßes mit dem Kopf eines Fußgängers von der Größe eines Erwachsenen oder eines Kindes ausgesetzt sind.

11. Teil nach einem der Ansprüche 1 bis 10, das sich auf dem Hauptteil einer so genannten Versenkungszone (12) des Kopfes des Fußgängers erstreckt.

12. Teil nach einem der Ansprüche 1 bis 11, aufweisend einstellbare Mittel zur Befestigung des optischen Blocks.

13. Teil nach einem der Ansprüche 1 bis 12, aufweisend Motorhaubenanschläge.

14. Teil nach einem der Ansprüche 1 bis 13, bei dem die Mittel zum Halten des optischen Blocks und/oder des Kotflügels ihre Versenkungskonfiguration auch unter der Wirkung einer teilweise vertikalen Kraft einnehmen können.

15. Einheit eines optischen Blocks und eines Teils nach einem der Ansprüche 1 bis 14, bei der das Teil (62) mit dem optischen Gehäuse (64) aus einem Stück ist.
